(19) Europäisches Patentamt
European Patent Office
Office européen des brevets

(11) **EP 4 513 200 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **24191559.4**

(22) Anmeldetag: **29.07.2024**

(51) Internationale Patentklassifikation (IPC):
***G01P 21/00*** *(2006.01)* ***G01P 15/18*** *(2013.01)*

(52) Gemeinsame Patentklassifikation (CPC):
**G01P 21/00;** G01P 15/18

(54) **VERFAHREN ZUM BETREIBEN EINES BESCHLEUNIGUNGSSENSORS UND SENSORVORRICHTUNG**

METHOD FOR OPERATING AN ACCELERATION SENSOR AND SENSOR DEVICE

PROCÉDÉ DE FONCTIONNEMENT D'UN CAPTEUR D'ACCÉLÉRATION ET DISPOSITIF DE CAPTEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.08.2023 DE 102023122286**

(43) Veröffentlichungstag der Anmeldung:
**26.02.2025 Patentblatt 2025/09**

(73) Patentinhaber: **DEKRA SE**
**70565 Stuttgart (DE)**

(72) Erfinder:
• **GRAßL, Björn**
**90584 Allersberg (DE)**
• **LIEBMANN, Lars**
**90427 Nürnberg (DE)**

(74) Vertreter: **Spachmann, Holger**
**Stumpf Patentanwälte PartGmbB**
**Alte Weinsteige 73**
**70597 Stuttgart (DE)**

(56) Entgegenhaltungen:
DE-A1- 102019 117 089    DE-A1- 102020 215 241
US-A1- 2003 115 930

**Beschreibung**

Die Erfindung betrifft ein Verfahren zum Betreiben eines Beschleunigungssensors sowie eine Sensorvorrichtung aufweisend einen nach diesem Verfahren betreibbaren Beschleunigungssensor.

STAND DER TECHNIK

Beschleunigungssensoren finden heutzutage im Stand der Technik bei einer Vielzahl verschiedenster technischer Applikationen Anwendung. Insbesondere für technische Prüfgeräte zur Sicherstellung der Betriebssicherheit sind Beschleunigungssensoren üblicherweise unabdingbar. Ein bekanntes Beispiel hierfür sind Prüfgeräte zu Erfassung vertikaler Bewegungsprofile, wie sie vor allem bei der Überprüfung der fahrdynamischen Eigenschaften von Aufzügen angewendet werden.

Aufgrund verschiedener rechtlicher Vorgaben ist es zwecks Sicherstellung der Prüfqualität notwendig, den bzw. die angewendeten Beschleunigungssensoren in regelmäßigen Abständen zu kalibrieren.

Üblicherweise wird der zu kalibrierende Beschleunigungssensor zur Kalibrierung in ein akkreditiertes Labor eingeschickt. Bei fest in dem entsprechenden Prüfgerät verbauten Sensoren ergibt sich jedoch die Problematik, dass diese zuvor vergleichsweise kompliziert bzw. aufwendig ausgebaut sowie nach erfolgter Kalibrierung wieder eingebaut werden müssen.

Alternativ dazu ist eine sogenannte Schnellkalibrierung des Beschleunigungssensors bekannt. Diese Schnellkalibrierung wird insbesondere bei in Konsumgeräten wie beispielsweise Smartphones oder Spielekontrollen verbauten Beschleunigungssensoren regelmäßig durchgeführt. Zur Kalibrierung wird hierbei das in vertikaler Richtung wirkende Schwerefeld der Erde, also die Erdbeschleunigung, genutzt. Bei der Kalibrierung wird der Beschleunigungssensor bzw. das entsprechende Gerät, in welchem der Beschleunigungssensor verbaut ist, zuerst mit der Oberseite und dann mit der Unterseite auf eine ebene Fläche gelegt. Mittels der bei dieser Verlagerung auf den Beschleunigungssensor einwirkenden Erdbeschleunigung wird dieser dann kalibriert.

Bei der Schnellkalibrierung ergibt sich jedoch die Problematik, dass diese aus mehreren Gründen nicht akkreditierbar ist und insofern die rechtlichen Anforderungen nicht erfüllt:

Zum einen muss von einer Fläche ausgegangen werden, die perfekt horizontal bzw. waagrecht ausgerichtet ist. Dies ist verständlicherweise im üblichen Alltag nur äußerst schwer zu gewährleisten. Daher ist die Rückführbarkeit der für die Kalibrierung verwendeten Messungen nicht gewährleistet.

Weiterhin liegt der kalibrierte Messbereich einer Z-Komponente des Beschleunigungssensors maximal im Bereich zwischen -1g und +1g. Für nach oben gerichtete Beschleunigungsvorgänge, bei welchen Beschleunigungen größer $\pm$ 1g wirken, muss der Messbereich daher extrapoliert werden, da der Beschleunigungssensor entsprechend dann in einem unkalibrierten Messbereich eingesetzt wird. Hierzu muss eine exakt lineare Antwort des Beschleunigungssensors in den Extrapolationsbereichen vorausgesetzt werden. Ferner müssen nichtlineare Raritäten und Clippingeffekte vernachlässigt werden.

Da insbesondere im Bereich der Prüfung von Aufzugsanlagen derartige Gegebenheiten, also vertikale Beschleunigungsvorgänge mit Beschleunigungen >1g, regelmäßig vorliegen, ist die Schnellkalibrierung für eine qualitativ hochwertige und rechtssichere Prüfung grundsätzlich nicht geeignet.

Die DE 10 2020 215 241 A1 offenbart ein Verfahren zur Kalibrierung eines mehrachsigen Beschleunigungssensors, wobei das Verfahren nach dem Einbau des Beschleunigungssensors in ein Endgerät, beispielsweise ein Smartphone, durchgeführt wird. Der Beschleunigungssensor ist dabei in eine Vorrichtung verbaut, die dazu ausgebildet ist, den Beschleunigungssensor zum Zwecke der Kalibrierung auf Kommando durch eine Maschine oder einen Benutzer in verschiedene räumliche Positionen zu verlagern bzw. zu verschwenken. Zur Kalibrierung ist vorgesehen, dass der Beschleunigungssensor mittels der Vorrichtung in verschiedene Positionen relativ zur Horizontalen gebracht wird, sodass die Erdbeschleunigung im Sensorkoordinatensystem des Beschleunigungssensors in eine festgelegte Raumrichtung wirkt. Mittels der in der jeweiligen Position auf den Beschleunigungssensor wirkenden Erdbeschleunigung wird daraufhin die Kalibrierung durchgeführt. Das Verfahren weist jedoch den Nachteil auf, dass die Kalibrierung nicht automatisiert, sondern manuell durchgeführt werden muss und der Beschleunigungssensor weiterhin, wie bereits im Stand der Technik bekannt, nur für den Bereich von $\pm$1g kalibriert bzw. kalibrierbar ist.

Die DE 10 2019 117 089 A1 offenbart ein Verfahren zur Kalibrierung der Orientierung eines in einem Fahrzeug verbauten Beschleunigungssensors. Der Beschleunigungssensor ist dabei in dem Fahrzeug in einer beliebigen Orientierungsposition montiert und wird mittels der Erdbeschleunigung in zumindest zwei Raumrichtungen kalibriert. Im Anschluss kann anhand des Winkelversatzes bzw. Offsets die Position des Beschleunigungssensors relativ zu dem Fahrzeug bestimmt werden, woraufhin das Koordinatensystem des Beschleunigungssensors mittels einer Transformationsmatrix auf das Koordinatensystem des Fahrzeugs transformiert wird, sodass die beiden Koordinatensysteme deckungsgleich sind. Nachteilig ist bei diesem Verfahren, dass der Beschleunigungssensor nur für den Bereich von $\pm$1g kalibriert bzw. kalibrierbar ist.

Die EP 1 701 135 A1 offenbart ein Verfahren bzw. eine Vorrichtung zum Kalibrieren eines Beschleunigungssensors. Hierbei ist vorgesehen, dass der Beschleunigungssensor auf einer drehbaren Scheibe mit einem definierten Abstand zur Drehachse montiert wird. Anschließend wird zum Zwecke der Kalibrierung die Drehscheibe in Drehung versetzt, wobei durch die daraus entstehende Rotation der Beschleunigungssensor unter Zuhilfenahme der Erdbeschleunigung kalibriert wird.

Nachteilig bei den bekannten Verfahren ist gemeinhin, dass der Beschleunigungssensor nur für den Bereich von $\pm 1g$ kalibriert bzw. kalibrierbar ist und für größere Beschleunigungen der kalibrierte Messbereich weiterhin extrapoliert werden muss, sodass keine akkreditierbare Kalibrierung vorliegt, die den rechtlichen Standards genügt.

Die Aufgabe der Erfindung ist es, ein demgegenüber verbessertes Verfahren zum Betreiben eines Beschleunigungssensors sowie eine verbesserte Sensorvorrichtung bereitzustellen.

Diese Aufgabe wird durch ein Verfahren und eine Sensorvorrichtung nach den unabhängigen Ansprüchen gelöst. Vorteilhafte Ausbildungen der Erfindung sind Gegenstand der Unteransprüche.

OFFENBARUNG DER ERFINDUNG

Die Erfindung geht aus von einem Verfahren zum Betreiben eines zumindest einachsigen Beschleunigungssensors mit zumindest einer Sensorachse für die Bestimmung einer Messbeschleunigung in Richtung einer Messachse. Zumindest vor Beginn des bestimmungsgemäßen Betriebs des Beschleunigungssensors wird, bevorzugt in zeitlichen Abständen wiederholend, ein, vorzugsweise automatischer, Kalibrieprozess von anteiligen Beschleunigungswerten in Richtung der Messachse in Richtung der Sensorachse des Beschleunigungssensors durchgeführt. Im Verlauf des Kalibrierprozesses wird die Sensorachse des Beschleunigungssensors in eine Vertikalposition ausgerichtet, in welcher die Sensorachse im Wesentlichen vertikal zur Erdoberfläche ausgerichtet ist. Dabei wird ein Maximalwert einer Beschleunigungskraft entlang der Sensorachse erfasst und der Maximalwert der Erdbeschleunigung von im Wesentlichen 1g gleichgesetzt. Anschließend wird die Sensorachse des Beschleunigungssensor in eine Horizontalposition ausgerichtet, in welcher die Sensorachse im Wesentlichen horizontal zur Erdoberfläche ausgerichtet ist. Dabei wird ein Minimalwert der Beschleunigungskraft entlang der Sensorachse erfasst und der Minimalwert mit im Wesentlichen 0g gleichgesetzt. Hierdurch ist der Beschleunigungssensor in Bezug auf die Sensorachse für Beschleunigungswerte im Bereich von 0g bis 1g durch den Maximalwert und den Minimalwert kalibriert.

Im Zusammenhang mit der vorliegenden Erfindung ist unter der Sensorachse diejenige Achse des Beschleunigungssensors zu verstehen, in welche er von Natur aus bzw. konstruktionsbedingt sensitiv ist. Unter der Messachse wiederum ist diejenige (imaginäre) Achse zu verstehen, in welche der Beschleunigungssensor im Rahmen des bestimmungsgemäßen Betriebs tatsächlich messen soll.

Die Messbeschleunigung ist insofern diejenige in Richtung der Messachse wirkende Beschleunigung, die während des bestimmungsgemäßen Betriebs gemessen werden soll bzw. gemessen wird.

Weiterhin ist im Zusammenhang mit der vorliegenden Erfindung unter der Betriebskonfiguration die während des bestimmungsgemäßen Betriebs vorliegende Konfiguration (Einstellung) des Beschleunigungssensors zu verstehen.

Vorliegend entspricht der Maximalwert 1g bzw. dem exakten Beschleunigungswert an der Stelle, an welcher der Beschleunigungssensor kalibriert wird. Dies kann beispielsweise mit einem zusätzlichen geeichten Beschleunigungssensor am Ort des üblichen Betriebs exakt bestimmt werden. Der Minimalwert wiederum entspricht einem Offsetwert des Sensors und sollte 0g entsprechen bzw. wird mit 0g gleichgesetzt.

Bezüglich der Erdbeschleunigung bedeutet "im Wesentlichen" vorliegend, dass je nach geographischem Punkt der Wert der Erdbeschleunigung wegen der Zentrifugalkraft, Erdabplattung und Höhenprofil regional um einige Promille um den ungefähren Wert von 9,81 m/s$^2$ variieren kann.

Erfindungsgemäß ist vorgesehen, dass der Beschleunigungssensor im Anschluss an den Kalibrierprozess für den bestimmungsgemäßen Betrieb, vorzugsweise automatisiert, in eine Betriebsposition verlagert wird, in welcher eine Winkelausrichtung zwischen der Sensorachse und der Messachse zwischen 0° bis 180°, bevorzugt zwischen 0° und 90° beträgt, und der Beschleunigungssensor während des bestimmungsgemäßen Betriebs in dieser Betriebsposition arretiert bleibt, so dass ein Sensorkoordinatensystem des Beschleunigungssensors auftretende bzw. erfasste Messbeschleunigungswerte in Bezug auf die Messachse derart in die Sensorsachse transformiert, dass durch den kalibrierten Beschleunigungssensor Messbeschleunigungswerte >1g in Sensorbeschleunigungswerte zwischen 0g und 1g in Bezug auf die Sensorachse transformierbar sind.

In anderen Worten ist erfindungsgemäß vorgesehen, dass der Beschleunigungssensor nach dem Kalibrierprozess in einer in Bezug auf die Horizontal- und Vertikalposition schrägen Betriebsposition arretiert wird (Winkelausrichtung zwischen Mess- und Sensorachse), sodass Beschleunigungswerte, die während des bestimmungsgemäßen Betriebs durch den Beschleunigungssensor erfassbar sind, größer sind (größer $\pm 1g$), als diejenigen Beschleunigungswerte, für die der Beschleunigungssensor im Verlauf des Kalibrierprozess kalibriert wurde (0g bis 1g). Mit anderen Worten können durch die mit der Verlagerung des Beschleunigungssensors in die Betriebsposition einhergehende Transformation des Sensorkoordinatensystems größere Beschleunigungsbereiche erfasst werden, als eigentlich kalibriert worden sind. Es erfolgt sozusagen eine Normierung des Sensorkoordinatensystems auf einen Nullpunkt bzw. eine Skalierung von dessen Intervallen bzw. der erfassbaren Beschleunigungswerte.

Die Betriebsposition ist diejenige (räumliche) Position bzw. Orientierung, in welche sich der Beschleunigungssensor während bzw. im Verlauf des bestimmungsgemäßen Betriebs befindet.

Unter der Winkelausrichtung ist im Zusammenhang mit der vorliegenden Erfindung der Abstand bzw. der Winkel zwischen der Messachse und der Sensorachse zu verstehen. Die Messbeschleunigungswerte sind diejenigen Beschleunigungswerte, die im bestimmungsgemäßen Betrieb des Beschleunigungssensors (in Richtung bzw. in Bezug auf die Messachse) gemessen bzw. erfasst werden. Die Messbeschleunigung wirken insofern in Richtung der Messachse.

Die Sensorbeschleunigungswerte sind insofern Beschleunigungswerte, die aus den in die Sensorachse hineintransformierten Messbeschleunigungswerten resultieren. Insofern wirken die Sensorbeschleunigungswerte in Richtung der Sensorachse bzw. beziehen sich auf diese.

Automatisch bzw. automatisiert bedeutet vorliegend, dass keine manuelle bzw. händische Kalibrierung vorgenommen wird, sondern die Verlagerung bzw. Kalibrierbewegung des Beschleunigungssensors autonom, insbesondere durch eine entsprechend ausgebildete Verlagereinrichtung, selbstständig durchgeführt wird, insbesondere in regelmäßigen Intervallen oder auf Anforderung. Selbiges gilt für die automatisierte Verlagerung in die Betriebsposition, diese erfolgt insofern selbstständig ohne manuelles Signal.

Das erfindungsgemäße Verfahren ermöglicht vorteilhafterweise eine vorzugsweise automatisierte und rechtssichere Kalibrierung des Beschleunigungssensors, bei welche dieser nicht vergleichsweise aufwändig ausgebaut und wieder eingebaut werden muss. Zudem sind auf besonders vorteilhafte Weise über den eigentlich kalibrierten Messbereich hinausgehende Beschleunigungswerte zuverlässig erfassbar. Insbesondere bei Anwendung in einem entsprechenden Prüfgerät ermöglicht ein nach dem erfindungsgemäßen Verfahren betriebener Beschleunigungssensor eine einfache, genaue und insofern besonders zuverlässige Messung von Beschleunigungswerten, sodass stets eine hohe Prüfqualität gewährleistbar ist.

Vorzugsweise kann die Sensorachse eine Hauptempfindlichkeitsachse des Beschleunigungssensor sein. Dies ist bei einem 1D-Sensor die Z-Achse, in der der Beschleunigungssensor aktiv ist, bei einem 2D-Sensor die X- und Y-Achse, wobei eine Kalibrierung in jede Achsenrichtung vorgenommen werden kann. Auch ein 3D-Sensor kann gemäß einer Weiterbildung der Erfindung genutzt werden, wobei alle drei Hauptempfindlichkeitsachsen bezüglich einer Messachse, in der erwartbar die höchsten Beschleunigungswerte auftreten werden, eine Kalibrierung der X-, Y-, und Z-Sensorachse erfolgen kann. 3D-Sensoren können beispielsweise in Land-, Luft-, oder WasserFahrzeugen, z.B. Flugzeugen, Helikopter, Achterbahnen etc. eingesetzt sein.

Gemäß einer bevorzugten Weiterbildung ist vorgesehen, dass im Rahmen des Kalibrierprozesses der Beschleunigungssensor zumindest in Z-Richtung als eine erste Sensorachse, insbesondere auch in X- und/oder Y-Richtung als eine zweite und/oder dritte Sensorachse, kalibriert wird. In anderen Worten wird vorzugsweise ein mehrachsiger Beschleunigungssensor verwendet. X-, Y- und Z-Richtung beziehen sich insofern auf die üblichen Raumrichtungen eines kartesischen Koordinatensystems, also Breite (X), Tiefe (Y) und Höhe (Z). Hierdurch ergibt sich der Vorteil, dass in mehrere Raumrichtungen Beschleunigungen erfassbar sind, sodass eine umfangreiche und dennoch qualitativ besonders hochwertige Prüfung erfolgen kann.

Gemäß einer bevorzugten Weiterbildung wird die Winkelausrichtung derart gewählt, dass üblicherweise auftretende maximale Messbeschleunigungswerte im Bereich von 1g in Bezug auf die Sensorachse derart abgebildet werden, dass die Messbeschleunigungswerte linear auf dem gesamten Bereich von 0g bis 1g der Sensorbeschleunigungswerte skaliert werden. In anderen Worten wird die Winkelausrichtung so gewählt, dass die zu erwartende oder gemessene maximale Beschleunigung auf 1g liegt bzw. auf 1g festgesetzt wird, und alle anderen (darunter liegenden) Beschleunigungen sich linear (auf den kalibrierten Messbereich von 0g bis 1g) verteilen (lineare Transformation). Vorteilhafterweise ist dadurch eine qualitativ hochwertige und einfach rückführbare Messung ermöglicht.

Insbesondere wird bei dem erfindungsgemäßen Verfahren das Prinzip der Fehlerfortpflanzung angewendet, bevorzugt um einen Fehler des Sensor-Offsets (Minimalwert) bei der Bestimmung der 0° (horizontale Ausrichtung der Sensorachse) und der Sensor-Linearitätskonstante (Koordinatentransformation) zu minimieren.

Gemäß einer bevorzugten Weiterbildung wird der Beschleunigungssensor mittels einer Verlagereinrichtung verlagert. Bei der Verlagereinrichtung handelt es sich bevorzugt um einen Stellaktuator, insbesondere einen Servomotor. Die Verlagereinrichtung kann beispielsweise gelenkähnlich oder anderweitig ausgebildet sein, jedoch stets derart, dass der Beschleunigungssensor um mindestens 90° in zumindest eine, bevorzugt in jede, Raumrichtung verschwenkbar ist. Die Verlagereinrichtung ist bevorzugt automatisierbar ausgebildet, also derart, dass sie den Beschleunigungssensor auf vorgegebene Weise selbstständig verlagern kann. Vorteilhafterweise ist dadurch eine einfach umsetzbare **Verlagerung** des Beschleunigungssensors ermöglicht, wobei die Verlagerung darüber hinaus vorteilhafterweise automatisiert erfolgen kann.

Insbesondere kann die Verlagerung insofern ferngesteuert, also auf Kommando, und/oder automatisiert, insbesondere in festlegbaren zeitlichen Intervallen, erfolgen. Die Verlagereinrichtung weist insofern bevorzugt eine entsprechend ausgebildete Steuereinheit und/oder zumindest Kommunikationsmittel auf.

Gemäß einer bevorzugten Weiterbildung beträgt die Winkelausrichtung des Beschleunigungssensors in der Betriebsposition 50° bis 70°, bevorzugt 60°. Vorteilhafterweise ist hierdurch durch den Beschleunigungssensor der größtmögliche Messbereich sicher erfassbar.

An diese Stelle soll exemplarisch die Berechnung eines akkreditierbaren Bereichs der Messbeschleunigung, bei welcher die Sensorbeschleunigung zwischen 0g und 1g liegt, in allgemeiner Form dargestellt werden. Im Fall einer Ausführungsform der Beschleunigungsmessung im Bereich von Etagenaufzügen setzt sich beispielsweise die Beschleunigung in vertikaler Richtung aus der Erdbeschleunigung g (ca. 9.81 m/s$^2$) und der Beschleunigung des Aufzugssystems $a_{Aufzug}$ zusammen. Die Aufzugsbeschleunigung $a_{Aufzug}$ ist mit positivem Vorzeichen bei einer Beschleunigung nach oben definiert. Mit dieser Definition gilt:

$$a_{Richtung\ M,max} = g + a_{Aufzug,max}\ und\ a_{Richtung\ M,min} = g + a_{Aufzug,min}$$

Ferner gilt

$$a_{Richtung\ S} = a_{Richtung\ M} * cos(\alpha)$$

mit $\alpha$ = Winkel zwischen Messachse M und Sensorachse S.

Bei einer Kalibrierung mit $a_{Richtung\ S} \in [0; g]$ gilt:

$$0g \leq a_{Richtung\ M} * cos(\alpha) \leq g$$

$$a_{Richtung\ M,min} * cos(\alpha) \geq 0g \quad \wedge \quad a_{Richtung\ M,max} * cos(\alpha) \leq g$$

$$\left(g + a_{Aufzug,min}\right) * cos(\alpha) \geq 0g \quad \wedge \quad \left(g + a_{Aufzug,max}\right) * cos(\alpha) \leq g$$

$$\left(g + a_{Aufzug,min}\right) \geq 0g \quad \wedge \quad \left(g + a_{Aufzug,max}\right) \leq g * \frac{1}{cos(\alpha)}$$

$$a_{Aufzug,min} \geq -g \quad \wedge \quad a_{Aufzug,max} \leq g * \frac{1}{cos(\alpha)} - g$$

$$a_{Aufzug} \in \left[-g; \left(\frac{1}{cos(\alpha)} - 1\right) * g\right]$$

| Beispiele Winkel α zwischen Messachse M und Sensorachse S | 0° | 15° | 30° | 45° | 60° | 70° |
|---|---|---|---|---|---|---|
| Min. der effektiven Aufzugsbeschleunigung ohne Erdbeschleunigung (-g entspricht Freifall) | -g | -g | -g | -g | -g | -g |
| Max. der effektiven Aufzugsbeschleunigung ohne Erdbeschleunigung | 0g entspr. Stillstand | 0.035g | 0.15g | 0.41g | 1g | 1.92g |

Ein Winkel von 60° zwischen der Messachse M und der Sensorachse S ist vorzugsweise für Beschleunigungssensoranwendungen im exemplarischen Bereich von Etagenaufzugsanwendungen optimal, da hieraus ein symmetrischer kalibrierter Bereich der zu messenden Aufzugsbeschleunigung resultiert, wobei gleichzeitig die Sensorsensitivität optimal genutzt werden kann.

Bei Aufzügen ist ein Beschleunigungsmessbereich von -g bis +g mehr als ausreichend. Bei anderen Anwendungen könnte der Bereich vergrößert werden, falls nicht nur bei 0° ($a_S$=1g) und 90° ($a_S$=0g) kalibriert wird, sondern auch noch zusätzlich bei 180° ($a_S$=-1g), also der Beschleunigungssensor auf den Kopf gestellt wird.

Im Beispiel der Messung einer Aufzugsbeschleunigung kann die Erdbeschleunigung als konstanter skalarer Offset betrachtet werden, da sich in der Regel ein Aufzug entlang der Schwerkraftsachse bewegt:

$$a_{Richtung\ M} = g + a_{Aufzug}$$

Bei anderen Anwendungen im Schwerefeld der Erde kann analog dazu vektoriell verfahren werden. Beispielsweise können damit Aufzugsbewegungen, die gegenüber der Schwerkraftsachse geneigt sind, verbessert erfasst werden.

Eine verallgemeinerte Transformation zwischen dem Messkoordinatensystem $\tilde{M}$ und dem Sensorkoordinatensystem $\tilde{S}$ erfolgt über eine SO(3)-Matrizen T. Dieses bietet sich an, sofern die Messachse nicht mit der Schwerkraftsachse zusammenfällt, wie dies beispielsweise bei Fahrzeugbewegungen, wie Landfahrzeug, Luftfahrzeug oder Wasserfahrzeug, oder beispielsweise Achterbahnfahrten der Fall sein kann. Diese Transformationen ergibt sich aus den Komponenten dieser generellen SO(3)-Drehmatrix T, die eine Überführung des dreidimensionalen Messkoordinatensystems M in das lageversetzte Sensorkoordinatensystem S beschreibt:

$$T = \begin{pmatrix} cos\theta\ cos\psi & sin\varphi\ sin\theta\ cos\psi - cos\varphi\ sin\psi & cos\varphi\ sin\theta\ cos\psi + sin\varphi\ sin\psi \\ cos\theta\ sin\psi & sin\varphi\ sin\theta\ sin\psi + cos\varphi\ cos\psi & cos\varphi\ sin\theta\ sin\psi - sin\varphi\ cos\psi \\ -sin\theta & sin\varphi\ cos\theta & cos\varphi\ cos\theta \end{pmatrix}$$

mit den Drehwinkeln $\psi$, $\theta$, $\varphi$ (nacheinander um die Achsen $M_z$ in Z-Achsenrichtung, $M_y$ in Y-Achsenrichtung und $M_x$ in X-Achsenrichtung) bei der Koordinatensystemtransformation von dem Messkoordinatensystem $\tilde{M}$ in das Sensorkoordinatensystem $\tilde{S}$. Im nachfolgenden kann vereinfacht angenommen werden, dass $\psi = 0°$ gilt.

Ist in $\tilde{M}$ die Beschleunigung $a_{\tilde{M}} = \begin{pmatrix} a_x \\ a_y \\ a_z + g \end{pmatrix}$, dann ist der vom Sensor gemessene Wert $a_{\tilde{S}} = b + K \cdot T \cdot a_{\tilde{M}}$ mit der Drehmatrix $T \in SO(3)$, dem vektoriellen Sensoroffset b und der diagonalen Kalibriermatrix $K \approx I_3$.

Die Diagonalkomponenten von K entsprechen den Linearitätsfaktoren der Sensorachsen, die Komponenten von b entsprechen deren Offsets. Bei der obigen Formel wird eine orthogonale Ausrichtung der Sensorachsen zueinander angenommen.

**Je nach Winkelausrichtung** ist dadurch vorteilhafterweise der Messbereich des Beschleunigungssensors auf zu erwartende Beschleunigungswerte einstellbar. Da im einfachsten Fall, bei Beschleunigungsmessungen entlang der Schwerkraftsachse die Sensorachse und die Messachse über den Kosinuswert des abweichenden Winkels $\alpha$ miteinander verknüpft sind, kann hierbei der transformierte Messbereich auf einfache Art und Weise berechnet werden, sodass die optimale Einstellung der Winkelausrichtung einfach ermittelbar ist.

Gemäß einer bevorzugten Weiterbildung ist die Betriebsposition eine erste Betriebsposition und der Beschleunigungssensor wird während des bestimmungsgemäßen Betriebs in eine von der ersten Betriebsposition abweichende zweite Betriebsposition, bei welcher die auf die Sensorachse wirkende Erdbeschleunigung $\geq 0g$ und $\leq 1g$ beträgt, verlagert. Insbesondere wird der Beschleunigungssensor dann verlagert, wenn in der ersten Betriebsposition eine Überschreitung von 1g in der Sensorachse auftritt. Vorteilhafterweise ist hierdurch eine bedarfsgerechte Skalierung/Transformation des Koordinatensystems je nach Anwendungsfall des Beschleunigungssensors ermöglicht. Beispielsweise kann in der ersten Betriebsposition die Winkelausrichtung 60° und in der zweiten Betriebsposition 30° betragen. Je nach Winkelausrichtung kann insofern der Bereich der erfassbaren Beschleunigungswerte variiert werden.

Vorzugsweise wird die Betriebsposition so gewählt, dass automatisch immer eine optimale Ausnutzung des Sensitivitätsintervalls des Beschleunigungssensors erfolgt. Der Beschleunigungssensor ist nämlich immer dann am genauesten, wenn das Sensitivitätsintervall voll ausgenutzt wird. Insofern treten bei maximalen Sensorwerten die kleinsten Messfehler auf.

Gemäß einer bevorzugten Weiterbildung wird der Maximalwert in der Vertikalposition iterativ ermittelt, wobei ausgehend von einer Grundposition, in welche die Sensorachse im Wesentlichen vertikal zur Erdoberfläche ausgerichtet ist, der Beschleunigungssensor in einer festgelegten Anzahl von diskreten Schritten, insbesondere 0,5°/s, um eine bestimmte Anzahl von Winkelgrad betragsmäßig geneigt und jeweils die dabei auf den Beschleunigungssensor wirkende Erdbeschleunigung gemessen wird, wobei die Vertikalposition auf diejenige Position festgelegt wird, an welcher die gemessene Erdbeschleunigung maximal ist und somit ein Maximalwert als Erdbeschleunigung von im Wesentlichen 1g erfassbar ist. Betragsmäßig heißt vorliegend sowohl in positive, als auch in negative Richtung. Vorteilhafterweise ist dadurch eine besonders präzise Kalibrierung des Beschleunigungssensors ermöglicht.

Gemäß einer bevorzugten Weiterbildung wird der Kalibrierprozess automatisiert, insbesondere zeitgesteuert, in festgelegten Intervallen wiederholend bzw. wiederholt durchgeführt. In anderen Worten wird in festgelegten Intervallen, beispielsweise nach einer bestimmten Zeit, der Kalibrierprozess automatisch erneut durchgeführt bzw. wiederholt. Vorteilhafterweise ist dadurch eine zuverlässige Kalibrierung des Beschleunigungssensors dauerhaft sicher gewährleistbar.

Gemäß einer bevorzugten Weiterbildung ist vorgesehen, dass der Beschleunigungssensor bei bestimmungsgemäßem Betrieb zur Prüfung von Aufzuganlagen verwendet wird. Das Verfahren kommt bevorzugt bei der Aufzugprüfung zum Einsatz. Bevorzugt ist der Sensor dazu in einem entsprechenden Prüfgerät verbaut, insbesondere beschädigungsfrei lösbar verbaut. Durch die Anwendung des vorstehend beschriebenen vorteilhaften Verfahrens bei der Prüfung von Aufzugsanlagen wird vorteilhafterweise eine effiziente und verlässliche Prüfung ermöglicht.

Die Erfindung betrifft weiterhin eine Sensorvorrichtung zur Messung einer Beschleunigung in Richtung einer Messachse mit einem Beschleunigungssensor mit zumindest einer Sensorachse für die Bestimmung einer Messbeschleunigung in Richtung der Messachse.

Erfindungsgemäß weist die Sensorvorrichtung eine Verlagereinrichtung auf, an welcher der Beschleunigungssensor montiert ist, wobei die Verlagereinrichtung dazu ausgebildet ist, die Sensorachse des Beschleunigungssensors gegenüber der Messachse, vorzugsweise automatisch, in eine jeweils festlegbare Vertikalposition, Horizontalposition und Betriebsposition auszurichten und zumindest in der Betriebsposition während des bestimmungsgemäßen Betriebs zu arretieren, wobei die Sensorvorrichtung zur Durchführung des vorstehend beschriebenen Verfahrens eingerichtet ist. Es ergeben sich die diesbezüglich bereits genannten Vorteile.

Gemäß einer bevorzugten Weiterbildung ist die Verlagereinrichtung als Stellaktuator, insbesondere Servomotor, ausgebildet. Es ergeben sich die diesbezüglich im Vorfeld bereits genannten Vorteile.

Gemäß einer bevorzugten Weiterbildung ist vorgesehen, dass der Beschleunigungssensor als mehrachsiger Beschleunigungssensor, wie im Vorfeld bereits beschrieben, ausgebildet ist. Es ergeben sich die diesbezüglich bereits genannten Vorteile.

Gemäß einer bevorzugten Weiterbildung ist vorgesehen, dass die Sensorvorrichtung als Prüfgerät zur Aufzugprüfung ausgebildet oder zumindest in ein solches Prüfgerät integriert bzw. verbaut ist. Es ergeben sich die entsprechenden im Vorfeld bereits genannten Vorteile. Insbesondere ist in diesem Fall die Messachse somit immer die Vertikalachse, wodurch aus mathematischer Sicht (Trigonometrie) die Ermittlung der benötigten Messgrößen besonders einfach ist.

Gemäß einer bevorzugten Weiterbildung weist die Sensorvorrichtung ein Steuergerät auf, in welches ein speziell zur Durchführung des Verfahrens hergerichtetes Computerprogramm implementiert ist. Vorteilhafterweise ist dadurch das Verfahren im Wesentlichen unabhängig von einem menschlichen Benutzer, insbesondere automatisiert, durchführbar sowie bei Bedarf durch einen entsprechenden Austausch des Steuergeräts in verschiedene Sensorvorrichtung implementierbar.

Die Erfindung betrifft weiterhin ein entsprechendes Computerprogrammprodukt mit einem Datenträger, auf welchem ein speziell zur Durchführung des vorstehend beschriebenen Verfahrens hergerichtetes Computerprogramm implementiert bzw. gespeichert ist. Es ergeben sich die diesbezüglich bereits genannten Vorteile.

ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 Eine stark vereinfachte schematische Darstellung des Ablaufs eines vorteilhaften Verfahrens zum Betreiben eines Beschleunigungssensors gemäß einem ersten Ausführungsbeispiel,

Fig. 2 eine stark vereinfachte schematische Darstellung des Ablaufs des Verfahrens gemäß einem zweiten Ausführungsbeispiel,

Fig. 3 eine stark vereinfachte schematische Darstellung eines ersten Ausführungsbeispiels einer den Beschleunigungssensor aufweisenden Sensorvorrichtung,

Fig. 4 eine stark vereinfachte schematische Darstellung eines zweiten Ausführungsbeispiels der Sensorvorrichtung, und

Fig. 5 eine stark vereinfachte Darstellung einer mittels eines die Sensorvorrichtung aufweisenden Prüfgeräts geprüften Aufzugsanlage.

In den Figuren sind gleichartige Elemente mit gleichen Bezugzeichen beziffert. Die Figuren zeigen lediglich Beispiele und sind nicht beschränkend zu verstehen.

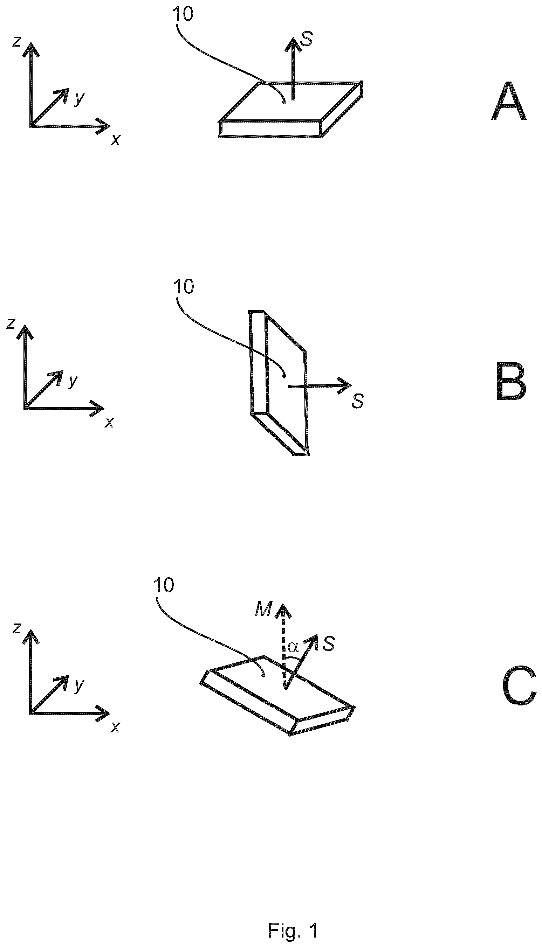

Figur 1 zeigt beispielhaft die wesentlichen Ausschnitte eines vorteilhaften Verfahrens zum Betreiben eines Beschleunigungssensors 10.

Bei dem Beschleunigungssensor 10 handelt es sich zumindest um einen einachsigen, bevorzugt um einen mehrachsigen, Beschleunigungssensor 10, welcher insofern zumindest eine Sensorachse S aufweist. Die Sensorachse S ist diejenige Achse, in welche der Beschleunigungssensor 10 konstruktionsbedingt sensitiv ist. In den Figuren ist der Beschleunigungssensor 10 beispielhaft durch einen Quader dargestellt, kann in der Realität jedoch jedwede bekannte geometrische Ausbildung aufweisen.

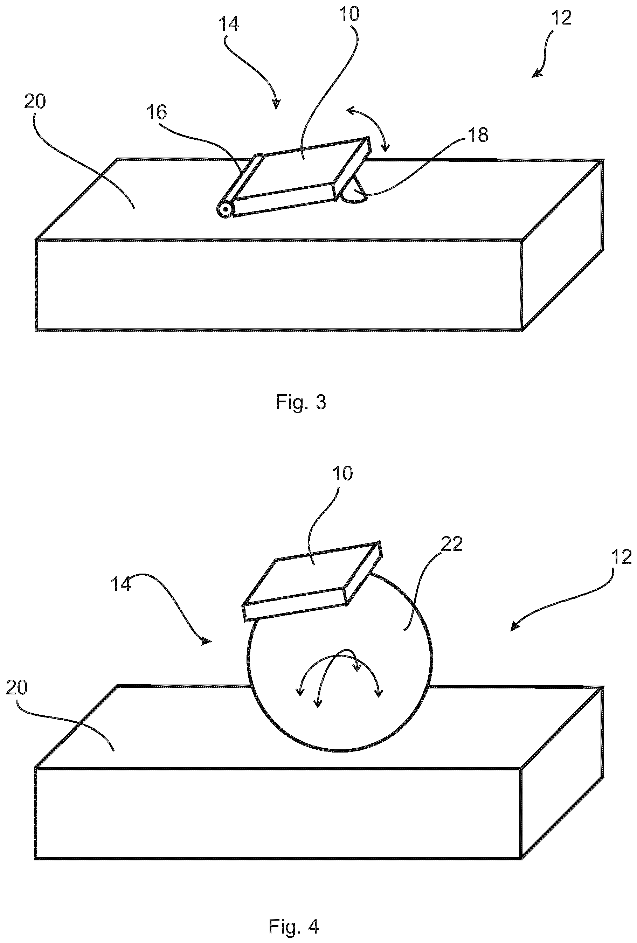

Der Beschleunigungssensor 10 ist bevorzugt Teil einer Sensorvorrichtung, welche wiederum vorzugsweise in einem Prüfgerät, welches insbesondere zur Prüfung von Aufzugsanlagen ausgebildet ist, verbaut ist, wie an späterer Stelle in Bezug auf Figuren 3 bis 5 noch näher erläutert wird.

Zum Beginn des Verfahrens wird zumindest vor Beginn des bestimmungsgemäßen Betriebs des Beschleunigungssensors 10 ein, vorzugsweise automatischer bzw. automatisierter, Kalibrierprozess durchgeführt. Im Rahmen dieses Kalibrierprozesses wird der Beschleunigungssensor 10 zur Gewährleistung verlässlicher Messergebnisse unter Zuhilfenahme der Erdbeschleunigung kalibriert. Der Kalibrierprozess wird bevorzugt in festgelegten zeitlichen Abständen wiederholt, um stets eine zuverlässige Kalibrierung des Beschleunigungssensors 10 zu gewährleisten, wobei die Kalibrierung bevorzugt stets selbstständig, d.h. ohne manuelles Eingreifen eines Benutzers, erfolgt.

Im Rahmen des Kalibrierprozesses wird der Beschleunigungssensor 10 zuerst in eine Vertikalposition automatisch ausgerichtet, wie in der Darstellung A von Figur 1 gezeigt ist. In der Vertikalposition ist die Sensorachse S im Wesentlichen vertikal zur Erdoberfläche ausgerichtet. In der Darstellung von Figur 1 befindet sich die Erdoberfläche in der XY-Ebene des dort dargestellten kartesischen Koordinatensystems. Die Ausrichtung des Beschleunigungssensors 10 erfolgt bevorzugt durch eine Verlagereinrichtung, die an späterer Stelle mit Bezug auf Figuren 3 und 4 noch näher erläutert wird.

Nach Ausrichten des Beschleunigungssensors 10 in die Vertikalposition wird ein Maximalwert einer auf den Beschleunigungssensor 10 wirkenden Beschleunigungskraft entlang der Sensorachse S erfasst. Bei der Beschleunigungskraft handelt es sich in diesem Fall um die unvermeidbar auf den Beschleunigungssensor 10 einwirkende Erdbeschleunigung. Der erfasste Maximalwert wird daraufhin der normierten Erdbeschleunigung, die im Wesentlichen, also abhängig von dem konkreten geographischen Einsatzort, ca. 1g beträgt, gleichgesetzt. Gleichwohl kann die exakte, an diesem Einsatzort vorherrschende Gravitationsbeschleunigung messtechnisch erfasst und zur Kalibrierung genutzt werden.

Vorzugsweise wird der Maximalwert iterativ ermittelt. Hierbei wird ausgehend von einer Grundposition, in welcher die Sensorachse S im Wesentlichen vertikal zur Erdoberfläche (XY-Ebene) ausgerichtet ist, der Beschleunigungssensor 10 in einer festgelegten Anzahl von diskreten Schritten um eine bestimmte Anzahl von Winkelgrad betragsmäßig, also sowohl in positive, als auch negative Richtung, geneigt. Hierbei wird die jeweils auf den Beschleunigungssensor 10 wirkende Erdbeschleunigung gemessen und die Vertikalposition auf diejenige Position festgelegt, in welcher die gemessene Erdbeschleunigung maximal ist.

Im Anschluss an das in Darstellung A gezeigte Verlagern des Beschleunigungssensors 10 in die Vertikalposition und Ermitteln des Maximalwerts wird der Beschleunigungssensor 10 im Rahmen des Kalibrierprozess automatisch in eine Horizontalposition verlagert, wie in der Darstellung B von Figur 1 gezeigt ist. In der Horizontalposition ist die Sensorachse S im Wesentlichen horizontal zur Erdoberfläche (XY-Ebene) ausgerichtet. Daraufhin wird in der Horizontalposition ein Minimalwert der entlang der Sensorachse S wirkenden Beschleunigungskraft (Erdbeschleunigung) erfasst und mit im Wesentlichen 0g gleichgesetzt.

Nach Abschluss des in Darstellungen A und B gezeigten Verlagerns des Beschleunigungssensors 10 in die Vertikal- und die Horizontalposition sowie dem jeweiligen Erfassen von Maximal- und Minimalwert ist der automatische Kalibrierprozess beendet und der Beschleunigungssensor 10 insofern in Bezug auf die Sensorachse S für Beschleunigungswerte im Bereich von 0g bis 1g durch den Maximalwert und den Minimalwert kalibriert. In anderen Worten ist nunmehr eine vorgesehene Betriebskonfiguration des Beschleunigungssensors 10 für den bestimmungsgemäßen Betrieb kalibriert.

Wie in Darstellung C von Figur 1 gezeigt ist, ist vorteilhafterweise vorgesehen, dass der Beschleunigungssensor 10 im Anschluss an den automatisierten Kalibrierprozess für den bestimmungsgemäßen Betrieb automatisiert in eine Betriebsposition verlagert wird. Diese Betriebsposition ist in Darstellung C gezeigt. In der Betriebsposition ist der Beschleunigungssensor 10 in Bezug auf die Vertikal-, und die Horizontalposition schräg angeordnet bzw. ausgerichtet. Dies führt dazu, dass eine Winkelausrichtung $\alpha$ zwischen der Sensorachse S und einer Messachse M zwischen 0° und 90° zumindest für einen 1D-Sensor beträgt. Bei einem zwei- oder dreidimensonalen Sensor kann bezüglich einer Sensorachse Sx, Sy, Sz auch eine Abwinkelung um mehr als 90° bis 180° denkbar sein. Die Messachse M ist diejenige (imaginäre) Achse, in welchem Rahmen des bestimmungsgemäßen Betriebs des Beschleunigungssensors 10 tatsächlich Beschleunigungen bzw. Messbeschleunigung gemessen werden bzw. gemessen werden sollen. Der Beschleunigungssensor 10 bleibt während des bestimmungsgemäßen Betriebs in dieser schrägen Betriebsposition arretiert, sodass ein Sensorkoordinatensystem des Beschleunigungssensors auftretende, in Richtung der Messachse M wirkende, Messbeschleunigungswerte derart in die Sensorachse S transformiert, dass durch den zuvor für den Messbereich 0g bis 1g kalibrierten Beschleunigungssensor 10 auch Messbeschleunigungswerte größer 1g in Sensorbeschleunigungswerte zwischen 0 und 1g in Bezug auf die Sensorachse S transformierbar sind.

In anderen Worten führt die schräge Ausrichtung des Beschleunigungssensors 10 (Winkelausrichtung $\alpha$) in der Betriebsposition dazu, dass Beschleunigungswerte, die während des bestimmungsgemäßen Betriebs durch den Beschleunigungssensor 10 erfassbar sind, größer sind, als diejenigen Beschleunigungswerte, für die der Beschleunigungssensor 10 im Verlauf des Kalibrierprozesses eigentlich kalibriert wurden. Anders gesagt können durch die mit der Verlagerung des Beschleunigungssensors 10 in die Betriebsposition einhergehende Transformation des Sensorkoordinatensystems größere Beschleunigungsbereiche erfasst werden, als eigentlich kalibriert wurden.

Das zuvor erörterte Verfahren hat somit den Vorteil, dass trotz einer einfachen Kalibrierung über den eigentlich kalibrierten Messbereich hinausgehende Beschleunigungswerte zuverlässig erfassbar sind, sodass insbesondere bei Anwendung in einem entsprechenden Prüfgerät zuverlässige Messungen und damit eine hohe Prüfqualität gewährleistbar ist.

Bevorzugt beträgt die Winkelausrichtung $\alpha$ des Beschleunigungssensors 10 in der Betriebsposition zwischen 50° und 70°, sodass das Sensitivitätsintervall des Beschleunigungssensors 10 optimal ausgenutzt wird. Grundsätzlich wird die Winkelausrichtung $\alpha$ derart gewählt, dass üblicherweise auftretende maximale Messbeschleunigungswerte im Bereich von 1g in Bezug auf die Sensorachse S derart abgebildet werden, dass die Messbeschleunigungswerte linear auf den gesamten kalibrierten Bereich von 0g bis 1g der Sensorbeschleunigungswerte skaliert werden. Hierdurch wird eine einfach rückführbare und dennoch zuverlässige Messung gewährleistet.

Im Rahmen des bestimmungsgemäßen Betriebs kann es notwendig sein, dass die Betriebsposition in Abhängigkeit des konkreten Anwendungsfalls verändert werden muss bzw. die mit der schrägen Betriebsposition einhergehende Skalierung des Messbereichs auf den Anwendungsfall angepasst werden muss.

Dazu ist bevorzugt vorgesehen, dass die Betriebsposition eine erste Betriebsposition ist und der Beschleunigungssensor 10 während des bestimmungsgemäßen Betriebs in eine von der ersten Betriebsposition abweichende zweite Betriebsposition sowie ggf. in weitere Betriebspositionen automatisch verlagert wird, je nachdem, welche Anforderungen im bestimmungsgemäßen Betrieb auftreten.

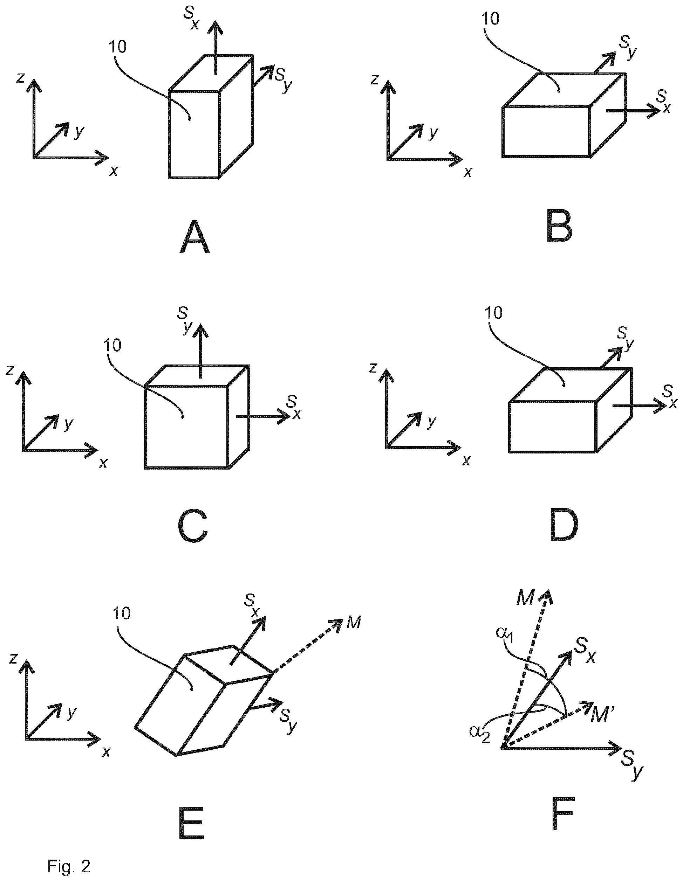

Figur 2 zeigt beispielhaft die wesentlichen Abschnitte des zuvor beschriebenen Verfahrens für den Fall, dass es sich bei dem Beschleunigungssensor 10 nicht, wie im Fall von Figur 1, um einen einachsigen Beschleunigungssensor 10, sondern um einen mehrachsigen Beschleunigungssensor 10 handelt.

In dem in Figur 2 gezeigten Ausführungsbeispiel weist der Beschleunigungssensor 10 insofern zwei Sensorachsen auf, nämlich eine erste, in X-Richtung ausgerichtete Sensorachse $S_x$ und eine zweite, in Y-Richtung ausgerichtete Sensorachse $S_y$. Grundsätzlich ist der Ablauf des Verfahrens im Falle des mehrachsiger Beschleunigungssensors 10 im Wesentlichen identisch bzw. die Verfahrensschritte sind die gleichen, wie für den einachsigen Beschleunigungssensor 10, mit dem Unterschied, dass im Rahmen des automatischen Kalibrierprozesses beide Sensorachsen $S_x$, $S_y$ kalibriert werden.

Das Verfahren beginnt insofern wieder mit dem automatischen Kalibrierprozess. Beispielhaft wird in Figur 2 zuerst die erste Sensorachse $S_x$, danach die zweite Sensorachse $S_y$ kalibriert. Selbstverständlich können die Sensorachsen jedoch auch in beliebiger anderer Reihenfolge kalibriert werden.

Wie in Darstellung A von Figur 2 gezeigt ist, wird der Beschleunigungssensor 10 insofern automatisch in eine erste Vertikalposition verlagert, in welcher die erste Sensorachse $S_x$ vertikal zur Erdoberfläche (XY-Ebene) ausgerichtet ist. Im Anschluss wird analog zu dem einachsigen Beschleunigungssensor 10 der Maximalwert der entlang der ersten Sensorachse $S_x$ wirkenden Beschleunigung (Erdbeschleunigung), erfasst bzw. gemessen und mit im wesentlichen 1g gleichgesetzt.

Im Anschluss wird, wie in Darstellung B von Figur 2 gezeigt ist, der Beschleunigungssensor 10 in eine erste Horizontalposition automatisch verlagert, in welcher die erste Sensorachse $S_x$ im Wesentlichen horizontal zur Erdoberfläche ausgerichtet ist und im Anschluss ein Minimalwert der entlang der ersten Sensorachse $S_x$ wirkenden Beschleunigungskraft (Erdbeschleunigung) gemessen und mit im wesentlichen 0g gleichgesetzt.

Wie in Darstellung C von Figur 2 gezeigt ist, wird im Anschluss der Beschleunigungssensor 10 automatisiert in eine zweite Vertikalposition verlagert, in welche nunmehr die zweite Sensorachse $S_y$ im Wesentlichen vertikal zur Erdoberfläche ausgerichtet ist. Daraufhin wird wiederum eine entlang der zweiten Sensorachse $S_y$ wirkende Beschleunigungskraft (Erdbeschleunigung) erfasst und mit im wesentlichen 1g gleichgesetzt.

Daraufhin wird, wie in Darstellung D von Figur 2 gezeigt ist, der Beschleunigungssensor 10 in eine zweite Horizontalposition automatisiert verlagert, in welcher die zweite Sensorachse $S_y$ nunmehr im Wesentlichen horizontal zur Erdoberfläche ausgerichtet ist. Auch hier wird wiederum ein Minimalwert der entlang der zweiten Sensorachse $S_y$ wirkenden Beschleunigungskraft gemessen bzw. erfasst und mit im wesentlichen 0g gleichgesetzt.

Die Darstellungen in Fig 2B und Fig 2D sind insofern identisch, dass sich sowohl $S_x$, als auch $S_y$ gleichzeitig im Wesentlichen in einer Horizontalposition befinden. Die Wege in diese Positionen unterscheiden sich jedoch dadurch, dass im Fall von Fig 2B die Sensorachse $S_x$ aus einer Senkrechtstellung in eine Horizontalstellung (90°-Rotation um die Y-Achse) geändert wurde, wohingegen der in Fig 2D gezeigte Zustand durch Horizontalausrichtung der Sensorachse $S_y$ aus einer vorhergehenden Vertikalposition (in die Blattebene hinein, 90°-Rotation um die X-Achse) entstand.

Analog zu dem zuvor anhand von Figur 1 erörterten einachsigen Beschleunigungssensor 10 ist nach den in Darstellungen A bis D gezeigten Verfahrensschritten der automatische Kalibrierprozess abgeschlossen und die beiden Sensorachsen $S_x$, $S_y$ des Bescheinigungssensors 10 sind jeweils für den Bereich von 0g bis 1g kalibriert.

Für den bestimmungsgemäßen Betrieb wird nunmehr der mehrachsiger Beschleunigungssensor 10 analog zu dem einachsigen Beschleunigungssensor 10 in eine Betriebsposition automatisch verlagert, in welcher er (in Bezug auf die XY-Ebene) schräg im Raum ausgerichtet ist. Diese (schräge) Betriebsposition ist in Darstellung E von Figur 2 exemplarisch gezeigt. Die entsprechende Messachse M, in welcher im Rahmen des bestimmungsgemäßen Betriebs Beschleunigungswerte bzw. Messbeschleunigungswerte gemessen werden sollen, weist insofern ebenfalls einen Winkelausrichtung $\alpha$ in Bezug auf die beiden Sensorachsen $S_x$, $S_y$ auf.

Diese Winkelausrichtung $\alpha$ ist in Darstellung F von Figur 2 genauer dargestellt. Die Messachse M weist im Falle des mehrachsigen Beschleunigungssensors 10 eine erste Winkelausrichtung $\alpha_1$ auf, die sich auf den Winkel zwischen der tatsächlichen Messachse M und einer in die von den beiden Sensorachsen $S_x$, $S_y$ aufgespannten Ebene hinein projizierte imaginäre Messachse M' erstreckt. Insofern handelt es sich bei der imaginären bzw. projizierten Messachse M' um die in die XY-Ebene hineinprojizierte Messachse M. Eine zweite Winkelausrichtung $\alpha_2$ wiederum erstreckt sich zwischen der projizierten imaginären Messachse M' und den Sensorachsen $S_x$, $S_y$. In der Darstellung F ist die zweite Winkelausrichtung $\alpha_2$ beispielhaft zwischen der imaginären (projizierten) Messachse M' und der ersten Sensorachse $S_x$ dargestellt. In diesem Fall beträgt logischerweise die zweite Winkelausrichtung $\alpha_2$ zwischen der imaginären Messachse M' und der zweiten Sensorachse $S_y$ 90° minus $\alpha_2$. Die Beziehung eines Beschleunigungswertes M und den Sensorwerten in Richtung Sx, Sy ergeben sich durch trigonometrische Funktionen, wobei beispielsweise der Winkel $\alpha_1$ zwischen der Messachse M und M' und ein weiterer Winkel zwischen M' und Sx $\alpha_2$ bzw. 90°- $\alpha_2$ zu Sy berücksichtigt werden können. Diese stehen im trigonometrischen Zusammenhang der Winkelausrichtungen, so dass sich z.B. für einen Messwert $s_x=m*\cos(\alpha_1) * \cos(\alpha_2)$ in Richtung $S_x$ und einen Messwert $s_y=m*\cos(\alpha_1) * \sin(\alpha_2)$ in Richtung $S_y$ mit dem Beschleunigungswert m in Richtung Messachse M ergibt.

Die vorgenannten Transformationen ergeben sich aus den Komponenten der weiter oben genannten generellen SO(3)-Drehmatrix T, die eine Überführung eines dreidimensionalen Messkoordinatensystems M in ein lageversetztes Sensorkoordinatensystem S beschreibt, mit den Drehwinkeln $\psi$, $\theta$, $\varphi$ (nacheinander um die Achsen $M_z$ in Z-Achsenrichtung, $M_y$ in Y-Achsenrichtung und $M_x$ in X-Achsenrichtung) bei der Koordinatensystemtransformation von der Messachse $\tilde{M}$ in die Sensorachse $\tilde{S}$ und $\psi = 0$.

Zusammenfassend sind die Verfahrensschritte für einen einachsigen Beschleunigungssensor 10 und einen mehrachsigen Beschleunigungssensor 10 analog, wobei für den Fall des mehrachsigen Beschleunigungssensors 10 selbstverständlich alle Sensorachsen im Rahmen des automatischen Kalibrierprozess kalibriert werden. Das automatische Ausrichten des Beschleunigungssensors 10 in die Betriebsposition im Anschluss an den Kalibrierprozess funktioniert jedoch auf gleiche Art und Weise, sodass sich die gleichen, zuvor bereits erörterten, Vorteile ergeben.

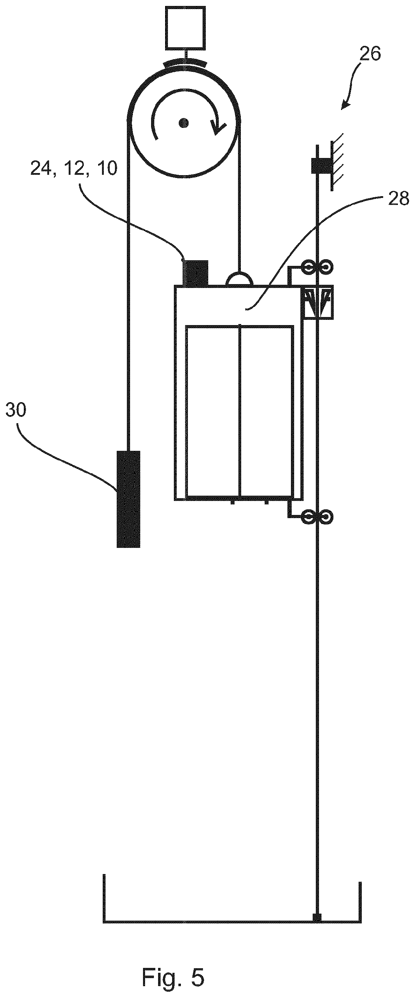

Figur 3 zeigt beispielhaft eine stark vereinfachte schematische Darstellung einer Sensorvorrichtung 12, die den nach dem zuvor beschriebenen Verfahren betreibbaren Beschleunigungssensor 10 aufweist. Die Sensorvorrichtung 12 ist bevorzugt Teil eines Prüfgeräts, insbesondere eines Prüfgeräts zur Prüfung von Aufzuganlagen, wie an späterer Stelle mit Bezug auf Figur 5 noch genauer erörtert wird.

Wie zuvor bereits ausführlich erörtert, wird der Beschleunigungssensor 10 im Rahmen des Verfahrens automatisch verlagert. Die Verlagerung des Beschleunigungssensors 10 erfolgt gemäß dem vorliegenden Ausführungsbeispiel mittels einer Verlagereinrichtung 14, die insofern Bestandteil der Sensorvorrichtung 12 sein kann. Die Verlagereinrichtung 14 ist dabei bevorzugt Stellaktuator, insbesondere Servomotor, ausgebildet.

Bei dem in Figur 3 gezeigten ersten Ausführungsbeispiel der Sensorvorrichtung 12 ist die Verlagereinrichtung 14 zur Verlagerung eines einachsigen Beschleunigungssensors 10 ausgebildet. Insofern ist die Verlagerungseinrichtung 14 derart ausgebildet, dass sie den Beschleunigungssensor 10 in zumindest eine Raumrichtung um mindestens 90° verlagern kann. Bei dem in Figur 3 gezeigten ersten Ausführungsbeispiel weist die Verlagereinrichtung 14 hierzu beispielhaft ein Scharnier 16 und eine Hubvorrichtung 18 auf, die jeweils mit einer Grundplatte 20 verbunden sind. Mit dieser Grundplatte 20 ist der Beschleunigungssensor 10 mittelbar mittels des Scharniers 16 unter Hubvorrichtung 18 verbunden. Wie beispielhaft durch den in Figur 3 gezeigten Doppelpfeil dargestellt ist, wird der Beschleunigungssensor 10 mittels der Hubvorrichtung 18 um die Drehachse des Scharniers 16 verlagert.

Weiterhin kann beispielsweise entsprechende Elektronik, insbesondere Steuergeräte zum Betrieb der Sensorvorrichtung 12, beispielsweise zur Durchführung des Verfahrens oder zumindest zum Betreiben der Verlagereinrichtung 14, im Inneren der Grundplatte 20 angeordnet sein. Auch kann die Grundplatte 20 Bestandteil der Verlagereinrichtung 14 sein.

Das in Figur 3 gezeigte erste Ausführungsbeispiel dient lediglich zur beispielhaften Veranschaulichung, wie das Verlagern des Beschleunigungssensors 10 prinzipiell erfolgen bzw. wie eine beispielhafte Verlagereinrichtung 14 ausgebildet sein kann. Selbstverständlich wird der Fachmann erkennen, dass auch anderweitige Ausbildungen der Verlagereinrichtung 14 bzw. Sensorvorrichtung 12 zweckdienlich sein können.

Figur 4 zeigt die Sensorvorrichtung 12 gemäß einem zweiten Ausführungsbeispiel. Bei dem zweiten Ausführungsbeispiel ist die Verlagereinrichtung 14 dazu ausgebildet, den Beschleunigungssensor 10 in zumindest zwei Raumrichtungen bzw. um zumindest 2 Achsen zu verlagern.

Insofern ist das in Figur 4 gezeigte zweite Ausführungsbeispiel der Sensorvorrichtung 12 bzw. Verlagereinrichtung 14 zum Verlagern eines mehrachsigen Beschleunigungssensors 10 geeignet. Beispielhaft weist die Verlagereinrichtung 14 in diesem Fall einen an der Grundplatte 20 montierten Rotationskörper 22 auf, an welchem wiederum der Beschleunigungssensor 10 montiert ist. Der Rotationskörper 22 ist in Figur 4 beispielhaft als Kugel dargestellt, welche insofern eine stufenlose Verlagerung des Beschleunigungssensors 10 entlang von zumindest zwei Achsen bzw. in zumindest zwei Raumrichtungen ermöglicht, wie anhand der beiden Doppelpfeile dargestellt ist.

Selbstverständlich kann im Falle des mehrachsigen Beschleunigungssensors 10 die Verlagereinrichtung 14 eine andere Ausbildung aufweisen, solange sie funktional weiterhin dazu in der Lage ist, den Beschleunigungssensor 10 in zumindest zwei Raumrichtungen um mindestens 90° zu verlagern. Auch hier wird der Fachmann insofern verstehen, dass andere Ausbildungen der Verlagereinrichtung 14 zweckdienlich sein können.

Die Sensorvorrichtung 12 weist weiterhin ein vorliegend aus Übersichtlichkeitsgründen nicht gezeigtes Steuergerät auf, in welchen ein speziell zur Durchführung des zuvor beschriebenen Verfahrens hergerichtetes Computerprogramm implementiert ist. Wie bereits erwähnt, kann dieses Steuergerät beispielsweise im Inneren der Grundplatte 20 angeordnet sein. Das Steuergerät ist allgemeinhin dazu ausgebildet, das Verfahren, insbesondere die Verlagerung des Beschleunigungssensors 10, automatisiert durchzuführen.

Zusätzlich kann vorgesehen sein, dass entsprechende Mittel, insbesondere Kommunikationsmittel zur Fernsteuerung, vorhanden sind, um ein manuelles Verlagern bzw. Einstellen des Beschleunigungssensors 10 durchzuführen, beispielsweise zum Zwecke einer bedarfsabhängigen erneuten Kalibrierung oder Feinjustierung.

Figur 5 zeigt abschließend die Verwendung des Beschleunigungssensors 10 bzw. der entsprechenden Sensorvorrichtung 12 im Zusammenhang mit einem Prüfgerät 24, welches zur Prüfung einer Aufzugsanlage 26 dient. Das Prüfgerät 24 und die Aufzugsanlage 26 sind in Figur 5 aus Übersichtlichkeitsgründen stark vereinfacht dargestellt.

Bei der Aufzugsanlage 26 handelt es sich um eine mittels einer Treibscheibe betriebene Aufzugsanlage. Das Funktionsprinzip einer solchen Aufzugsanlage sowie die zugehörigen Komponenten sind grundsätzlich bekannt, sodass aus Übersichtlichkeitsgründen an dieser Stelle auf eine nähere Erörterung diesbezüglich verzichtet wird. Auch sind aus Übersichtlichkeitsgründen nicht alle Elemente der Aufzugsanlage 26 mit einem Bezugszeichen versehen.

Wie bereits erwähnt, ist in dem in Figur 5 durch einen einfachen Kasten vereinfacht dargestellten Prüfgerät 24 die zuvor beschriebene, den Beschleunigungssensor 10 aufweisende, Sensorvorrichtung 12 integriert. Das Prüfgerät 24 dient dazu, die Betriebsfähigkeit der Aufzugsanlage, insbesondere die Treibfähigkeit, durch Erfassung verschiedener Beschleunigungswerte zu überprüfen.

Zu diesem Zweck wird das Prüfgerät 24 in einem der im Rahmen des bestimmungsgemäßen Betriebs regelmäßig beschleunigen Elemente der Aufzugsanlage 26 angeordnet. In Figur 5 ist das Prüfgerät 24 beispielhaft im Bereich eines Fahrkorbs 28 der Aufzugsanlage 26 angeordnet. Alternativ oder zusätzlich dazu kann das Prüfgerät 24 auch im Bereich eines Gegengewichts 30 der Aufzugsanlage 26 angeordnet werden. Durch die Anordnung an einem dieser beiden beweglichen Elemente der Aufzugsanlage 26 wird das Prüfgerät 24 zusammen mit dem jeweiligen Element, also dem Fahrkorb 28 oder dem Gegengewicht 30, mitbeschleunigt, sodass durch die integrierte Sensorvorrichtung 12 bzw. den entsprechenden Beschleunigungssensor 10 die auftretenden Messbeschleunigungen erfassbar sind.

Sicherheitsrelevante Beschleunigungssensoren in Aufzügen, aber z.B. auch in fliegenden Bauten wie Achterbahnen, oder in Land-, Luft-, oder Wasserfahrzeugen kann das vorgeschlagene Betriebs- und Kalibrierverfahren eingesetzt werden.

Durch das Betreiben des Beschleunigungssensors 10 nach dem eingangs erörterten vorteilhaften Verfahren sind dabei über den eigentlich kalibrierten Messbereich hinausgehende Beschleunigungen zuverlässig erfassbar, sodass eine verlässliche Prüfung gewährleistbar ist.

**Bezugszeichenliste**

10   Beschleunigungssensor
12   Sensorvorrichtung
14   Verlagereinrichtung
16   Scharnier
18   Hubvorrichtung
20   Grundplatte

22 Rotationskörper
24 Prüfgerät
26 Aufzugsanlage
28 Fahrkorb
30 Gegengewicht
M Messachse
M' Projizierte Messachse
S Sensorachse
$S_x$ Erste Sensorachse
$S_y$ Zweite Sensorachse

**Patentansprüche**

1. Verfahren zum Betreiben eines zumindest einachsigen Beschleunigungssensors (10) mit zumindest einer Sensorachse (S) für die Bestimmung einer Messbeschleunigung in Richtung einer Messachse (M), wobei zumindest vor Beginn des bestimmungsgemäßen Betriebs des Beschleunigungssensors (10), bevorzugt in zeitlichen Abständen wiederholend, ein, bevorzugt automatischer, Kalibrierprozess von anteiligen Beschleunigungswerten in Richtung der Messachse (M) in Richtung der Sensorachse (S) des Beschleunigungssensors (10) durchgeführt wird, wobei im Verlauf des Kalibrierprozesses die Sensorachse (S) des Beschleunigungssensors (10) in eine Vertikalposition ausgerichtet wird, in welcher die Sensorachse (S) im Wesentlichen vertikal zur Erdoberfläche ausgerichtet ist, und ein Maximalwert einer Beschleunigungskraft entlang der Sensorachse (S) erfasst wird, wobei der Maximalwert der Erdbeschleunigung von im Wesentlichen 1g gleichgesetzt wird, und anschließend die Sensorachse (S) des Beschleunigungssensors (10) in eine Horizontalposition ausgerichtet wird, in welcher die Sensorachse (S) im Wesentlichen horizontal zur Erdoberfläche ausgerichtet ist, und ein Minimalwert der Beschleunigungskraft entlang der Sensorachse (S) erfasst wird, wobei der Minimalwert mit im Wesentlichen 0g gleichgesetzt wird, sodass der Beschleunigungssensor (10) in Bezug auf die Sensorachse (S) für Beschleunigungswerte im Bereich von 0g bis 1g durch den Maximalwert und den Minimalwert kalibriert ist, **dadurch gekennzeichnet, dass** der Beschleunigungssensor (10) im Anschluss an den Kalibrierprozess für den bestimmungsgemäßen Betrieb in eine Betriebsposition verlagert wird, in welcher zumindest eine Winkelausrichtung ($\alpha$) zwischen der Sensorachse (S) und der Messachse (M) zwischen 0° bis 180°, bevorzugt zwischen 0° und 90° beträgt, und während des bestimmungsgemäßen Betriebs in dieser Betriebsposition arretiert bleibt, so dass ein Sensorkoordinatensystem des Beschleunigungssensors (10) auftretende Messbeschleunigungswerte in Bezug auf die Messachse (M) derart in die Sensorsachse (S) transformiert, dass durch den kalibrierten Beschleunigungssensor (10) Messbeschleunigungswerte >1g in Sensorbeschleunigungswerte zwischen 0g und 1g in Bezug auf die Sensorachse (S) transformierbar sind.

2. Verfahren nach Anspruch 1, **dadurch gekennzeichnet, dass** die Sensorachse (S) eine Hauptempfindlichkeitsachse des Beschleunigungssensors (10) ist.

3. Verfahren nach Anspruch 1, **dadurch gekennzeichnet, dass** im Rahmen des Kalibrierprozesses der Beschleunigungssensor (10) zumindest in Z-Richtung als eine erste Sensorachse, insbesondere auch in X- und/oder Y-Richtung als eine zweite und/oder dritte Sensorachse, kalibriert wird.

4. Verfahren nach einem der vorhergehenden Ansprüche, **dadurch gekennzeichnet, dass** die Winkelausrichtung ($\alpha$) derart gewählt wird, dass üblicherweise auftretende maximale Messbeschleunigungswerte im Bereich von 1g in Bezug auf die Sensorachse (S) derart abgebildet werden, dass die Messbeschleunigungswerte linear auf den gesamten Bereich von 0g bis 1g der Sensorbeschleunigungswerte skaliert werden.

5. Verfahren nach einem der vorhergehenden Ansprüche, **dadurch gekennzeichnet, dass** der Beschleunigungssensor (10) mittels einer Verlagereinrichtung (14), bevorzugt einem Stellaktuator, insbesondere Servomotor, verlagert wird.

6. Verfahren nach einem der vorhergehenden Ansprüche, **dadurch gekennzeichnet, dass** die Winkelausrichtung ($\alpha$) des Beschleunigungssensors (10) in der Betriebsposition 50° bis 70°, bevorzugt 60°, beträgt.

7. Verfahren nach einem der vorhergehenden Ansprüche, **dadurch gekennzeichnet, dass** die Betriebsposition eine erste Betriebsposition ist und der Beschleunigungssensor (10) während des bestimmungsgemäßen Betriebs in eine von der ersten Betriebsposition abweichende zweite Betriebsposition, bei welcher die auf die Sensorachse (S) wirkende Erdbeschleunigung ≥0g und ≤1g beträgt, verlagert wird, insbesondere wenn in der ersten Betriebsposition eine Überschreitung von 1g in der Sensorachse (S) auftritt.

8. Verfahren nach einem der vorhergehenden Ansprüche, **dadurch gekennzeichnet, dass** der Maximalwert in der Vertikalposition iterativ ermittelt wird, wobei ausgehend von einer Grundposition, in welcher die Sensorachse (S) im Wesentlichen vertikal zur Erdoberfläche ausgerichtet ist, der Beschleunigungssensor (10) in einer festgelegten Anzahl von diskreten Schritten, insbesondere 0,5°/Sekunde, um eine bestimmte Anzahl von Winkelgrad betragsmäßig geneigt und jeweils die dabei auf den Beschleunigungssensor (10) wirkende Erdbeschleunigung gemessen wird, wobei die Vertikalposition auf die Position festgelegt wird, an welcher die gemessene Erdbeschleunigung maximal ist und somit ein Maximalwert als Erdbeschleunigung von im wesentlichen 1g erfassbar ist.

9. Verfahren nach einem der vorhergehenden Ansprüche, **dadurch gekennzeichnet, dass** der Kalibrierprozess automatisiert, insbesondere zeitgesteuert, in festgelegten Intervallen wiederholt durchgeführt wird.

10. Verfahren nach einem der vorhergehenden Ansprüche, **dadurch gekennzeichnet, dass** der Beschleunigungssensor (10) bei bestimmungsgemäßem Betrieb zur Prüfung von Aufzugsanlagen (26) verwendet wird.

11. Sensorvorrichtung (12) zur Messung einer Beschleunigung in Richtung einer Messachse (M) mit einem Beschleunigungssensor (10) mit zumindest einer Sensorachse (S) für die Bestimmung einer Messbeschleunigung in Richtung der Messachse (M), **gekennzeichnet durch** eine Verlagereinrichtung (14), an welcher der Beschleunigungssensor (10) montiert ist, wobei die Verlagereinrichtung (14) dazu ausgebildet ist, die Sensorachse (S) des Beschleunigungssensors (10) gegenüber der Messachse (M), bevorzugt automatisch, in eine jeweils festlegbare Vertikalposition, Horizontalposition und Betriebsposition auszurichten und zumindest in der Betriebsposition während des bestimmungsgemäßen Betriebs zu arretieren, wobei die Sensorvorrichtung (12) Mittel zur Durchführung des Verfahrens nach einem der Ansprüche 1 bis 9 aufweist.

12. Sensorvorrichtung nach Anspruch 11, **dadurch gekennzeichnet, dass** die Verlagereinrichtung (14) als Stellaktuator, insbesondere Servomotor, ausgebildet ist.

13. Sensorvorrichtung nach einem der Ansprüche 11 oder 12, **dadurch gekennzeichnet, dass** der Beschleunigungssensor (10) als mehrachsiger Beschleunigungssensor ausgebildet ist.

14. Sensorvorrichtung nach einem der Ansprüche 11 bis 13, **dadurch gekennzeichnet, dass** die Sensorvorrichtung (12) als Prüfgerät (24) zur Aufzugsprüfung ausgebildet oder zumindest in ein solches Prüfgerät (24) integrierbar ist.

15. Sensorvorrichtung nach einem der Ansprüche 11 bis 14, **dadurch gekennzeichnet, dass** die Sensorvorrichtung (12) ein Steuergerät aufweist, in welches ein speziell zur Durchführung des Verfahrens nach einem der Ansprüche 1 bis 10 hergerichtetes Computerprogramm implementiert ist.

16. Computerprogrammprodukt mit einem Datenträger umfassend Programmschritte, die die Sensorvorrichtung gemäß Anspruch 15 veranlassen, die Verfahrensschritte des Verfahrens gemäß einem der Ansprüche 1 bis 10 auszuführen, wenn das Computerprogramm in dem Steuergerät ausgeführt wird.

**Claims**

1. A method for operating an at least single-axis acceleration sensor (10) having at least one sensor axis (S) for determining a measured acceleration in the direction of a measurement axis (M), wherein a preferably automatic calibration process of proportional acceleration values in the direction of the measurement axis (M) is performed in the direction of the sensor axis (S) of the acceleration sensor (10), at least prior to starting operation as intended of the acceleration sensor (10) and preferably repeating at intervals, wherein during the course of the calibration process the sensor axis (S) of the acceleration sensor (10) is oriented into a vertical position in which the sensor axis (S) is oriented substantially vertical to the earth's surface, and a maximum value of an acceleration force along the sensor axis (S) is detected, wherein the maximum value is set at the level of the gravitational acceleration of substantially 1g, and then the sensor axis (S) of the acceleration sensor (10) is oriented into a horizontal position in which the sensor axis (S) is oriented substantially horizontal to the earth's surface, and a minimum value of the acceleration force along the sensor axis (S) is detected, wherein the minimum value is set at the level of substantially 0g, such that the acceleration sensor (10) is calibrated in relation to the sensor axis (S) for acceleration values in the range from 0g to 1g by the maximum value and the minimum value, **characterized in that** the acceleration sensor (10) is, following the calibration process for operation as intended, moved into an operating position in which at least one angular orientation ($\alpha$) between the sensor axis (S) and the measurement axis (M) is between 0° and 180°, preferably between 0° and 90°, and remains locked in this operating position during operation as intended, so that a sensor coordinate system of the acceleration sensor (10) transforms measured acceleration values occurring in relation to the measurement axis (M) into the sensor axis (S), such that measured acceleration values of >1g are transformable by the calibrated acceleration sensor (10) into sensor acceleration values of between 0g and 1g in relation to the sensor axis (S).

2. The method according to claim 1, **characterized in that** the sensor axis (S) is a main sensitivity axis of the acceleration sensor (10).

3. The method according to claim 1, **characterized in that** in the course of the calibration process the acceleration sensor (10) is calibrated at least in the Z direction as a first sensor axis, in particular also in the X and/or Y direction as a second and/or third sensor axis.

4. The method according to any of the preceding claims, **characterized in that** the angular orientation ($\alpha$) is selected such that maximum measured acceleration values usually occurring in the region of 1g in relation to the sensor axis (S) are imaged such that the measured acceleration values are scaled in linear manner over the entire range of the sensor acceleration values from 0g to 1g.

5. The method according to any of the preceding claims, **characterized in that** the acceleration sensor (10) is moved by means of a moving device (14), preferably a setting actuator, in particular a servomotor.

6. The method according to any of the preceding claims, **characterized in that** the angular orientation ($\alpha$) of the acceleration sensor (10) in the operating position is 50° to 70°, preferably 60°.

7. The method according to any of the preceding claims, **characterized in that** the operating position is a first operating position and the acceleration sensor (10) is, during operation as intended, moved into a second operating position differing from the first operating position in which the gravitational acceleration acting on the sensor axis (S) is $\geq$0g and $\leq$1g, in particular if an overshoot of 1g occurs in the sensor axis (S) in the first operating position.

8. The method according to any of the preceding claims, **characterized in that** the maximum value in the vertical position is determined iteratively, wherein the acceleration sensor (10) is, starting from a basic position in which the sensor axis (S) is oriented substantially vertical to the earth's surface, inclined in a fixed number of discrete steps, in particular of 0.5°/second, by a defined number of angular degrees according to amount, and in each case the gravitational acceleration acting on the acceleration sensor (10) is measured, wherein the vertical position is fixed at the position at which the measured gravitational acceleration is at maximum and hence a maximum value of substantially 1g is detectable as the gravitational acceleration.

9. The method according to any of the preceding claims, **characterized in that** the calibration process is performed repeatedly and at fixed intervals in an automated and in particular time-controlled manner.

10. The method according to any of the preceding claims, **characterized in that** the acceleration sensor (10) is used for testing elevator systems (26) during operation as intended.

11. A sensor device (12) for measuring an acceleration in the direction of a measurement axis (M) with an acceleration sensor (10) having at least one sensor axis (S) for determining a measured acceleration in the direction of the measurement axis (M), **characterized by** a moving device (14) on which the acceleration sensor (10) is mounted, wherein the moving device (14) is designed to orient the sensor axis (S) of the acceleration sensor (10) relative to the measurement axis (M), preferably automatically, into a respectively fixable vertical position, horizontal position and operating position, and to lock it at least in the operating position during operation as intended, wherein the sensor device (12) has means for performing the method according to any of claims 1 to 9.

12. The sensor device according to claim 11, **characterized in that** the moving device (14) is designed as a setting actuator, in particular as a servomotor.

13. The sensor device according to either of claims 11 or 12, **characterized in that** the acceleration sensor (10) is designed as a multi-axis acceleration sensor.

**EP 4 513 200 B1**

**14.** The sensor device according to any of claims 11 to 13, **characterized in that** the sensor device (12) is designed as a testing device (24) for elevator testing or is at least integratable into such a testing device (24).

**15.** The sensor device according to any of claims 11 to 14, **characterized in that** the sensor device (12) has a control device in which a computer program configured specifically for performance of the method according to any of claims 1 to 10 is implemented.

**16.** A computer program product with a data carrier comprising program steps which cause the sensor device according to claim 15 to perform the method steps of the method according to any of claims 1 to 10 when the computer program in the control device is performed.

**Revendications**

**1.** Procédé destiné à exploiter un capteur d'accélération (10) au moins uniaxial avec au moins un axe de détection (S) pour la détermination d'une accélération mesurée dans le sens d'un axe de mesure (M), sachant qu'au moins avant le début de l'exploitation conforme à l'usage prévu du capteur d'accélération (10), de préférence se répétant à des intervalles de temps, un processus de calibrage, de préférence automatique, de parts de valeurs d'accélération dans le sens de l'axe de mesure (M) est réalisé dans le sens de l'axe de détection (S) du capteur d'accélération (10), sachant qu'au cours du processus de calibrage, l'axe de détection (S) du capteur d'accélération (10) est dirigé dans une position verticale dans laquelle l'axe de détection (S) est dirigé essentiellement verticalement par rapport à la surface terrestre, et qu'une valeur maximale de l'accélération de la pesanteur le long de l'axe de détection (S) est acquise, sachant que la valeur maximale de l'accélération de la pesanteur est assimilée essentiellement à 1g, et qu'ensuite l'axe de détection (S) du capteur d'accélération (10) est dirigé dans une position horizontale dans laquelle l'axe de détection (S) est dirigé essentiellement horizontalement par rapport à la surface terrestre, et qu'une valeur minimale de la force d'accélération est acquise le long de l'axe de détection (S), sachant que la valeur minimale est assimilée essentiellement à 0g de sorte que le capteur d'accélération (10) est calibré, par rapport à l'axe de détection (S), pour des valeurs d'accélération situées dans la plage comprise entre 0g et 1g, par la valeur maximale et la valeur minimale, **caractérisé en ce que** le capteur d'accélération (10) est décalé, après le processus de calibrage, dans une position d'exploitation pour l'exploitation conforme à l'usage prévu, dans laquelle au moins une orientation angulaire (α) entre l'axe de détection (S) et l'axe de mesure (M) est comprise entre 0° et 180°, de préférence entre 0° et 90°, et reste arrêtée dans cette position d'exploitation pendant l'exploitation conforme à l'usage prévu si bien qu'un système de coordonnées du capteur d'accélération (10) transpose sur l'axe de détection (S) des valeurs d'accélération mesurées apparaissant par rapport à l'axe de mesure (M) de sorte que par le biais du capteur d'accélération (10) calibré, des valeurs d'accélération mesurées >1g sont transposables en des valeurs d'accélération de capteur comprises entre 0g et 1g par rapport à l'axe de détection (S).

**2.** Procédé selon la revendication 1, **caractérisé en ce que** l'axe de détection (S) est un axe principal de sensibilité du capteur d'accélération (10).

**3.** Procédé selon la revendication 1, **caractérisé en ce que**, dans le cadre du processus de calibrage, le capteur d'accélération (10) est calibré au moins dans le sens Z comme premier axe de détection, notamment également dans le sens X et/ou Y comme deuxième et/ou troisième axe de détection.

**4.** Procédé selon l'une des revendications précédentes, **caractérisé en ce que** l'orientation angulaire (α) est sélectionnée de telle sorte que des valeurs d'accélération mesurées maximales apparaissant généralement dans la plage de 1g sont représentées par rapport à l'axe de détection (S) de telle sorte que les valeurs d'accélération mesurées sont mises à l'échelle linéairement sur la totalité de la plage comprise entre 0g et 1g des valeurs d'accélération du capteur.

**5.** Procédé selon l'une des revendications précédentes, **caractérisé en ce que** le capteur d'accélération (10) est décalé au moyen d'un dispositif de décalage (14), de préférence un actionneur, notamment un servomoteur.

**6.** Procédé selon l'une des revendications précédentes, **caractérisé en ce que** l'orientation angulaire (α) du capteur d'accélération (10) en position d'exploitation est comprise entre 50° et 70°, s'élève de préférence à 60°.

**7.** Procédé selon l'une des revendications précédentes, **caractérisé en ce que** la position d'exploitation est une première position d'exploitation et le capteur d'accélération (10) est décalé pendant l'exploitation conforme à l'usage prévu dans une seconde position d'exploitation différant de la première position d'exploitation, pour laquelle l'accélération de la pesanteur agissant sur l'axe de détection (S) est ≥ 0g et ≤ 1g, notamment si, dans la première position d'exploitation, un dépassement de 1g a lieu sur l'axe de détection (S).

8. Procédé selon l'une des revendications précédentes, **caractérisé en ce que** la valeur maximale est déterminée de manière itérative dans la position verticale, sachant que partant d'une position initiale dans laquelle l'axe de détection (S) est dirigé essentiellement verticalement à la surface terrestre, le capteur d'accélération (10) est incliné d'un certain nombre de degrés angulaire, dans un nombre défini de pas discrets, notamment 0,5 /seconde et que pour chaque, l'accélération de la pesanteur agissant alors sur le capteur d'accélération (10) est mesurée, sachant que la position verticale est fixée sur la position à laquelle l'accélération de la pesanteur mesurée est maximale et qu'ainsi, une valeur maximale peut être acquise comme accélération de la pesanteur d'essentiellement 1g.

9. Procédé selon l'une des revendications précédentes, **caractérisé en ce que** le processus de calibrage est réalisé de manière automatisée, notamment programmée dans le temps, répétée à des intervalles définis.

10. Procédé selon l'une des revendications précédentes, **caractérisé en ce que** le capteur d'accélération (10) pour une exploitation conforme à l'usage prévu est utilisé pour contrôler des ascenseurs (26).

11. Dispositif à capteur (12) pour mesurer un accélération dans le sens d'un axe de mesure (M) avec un capteur d'accélération (10) avec au moins un axe de détection (S) pour la détermination d'une accélération mesurée dans le sens de l'axe de mesure (M), **caractérisé en** un dispositif de décalage (14) sur lequel est monté le capteur d'accélération (10), sachant que le dispositif de décalage (14) est conçu pour orienter l'axe de détection (S) du capteur d'accélération (10) par rapport à l'axe de mesure (M), de préférence automatiquement, dans une position verticale, une position horizontale et une position d'exploitation déterminables et l'arrêter au moins dans la position d'exploitation pendant l'exploitation conforme à l'usage prévu, sachant que le dispositif à capteur (12) présente des moyens d'exécuter le procédé selon l'une des revendications 1 à 9.

12. Dispositif à capteur selon la revendication 11, **caractérisé en ce que** le dispositif de décalage (14) est conçu comme actionneur, notamment comme servomoteur.

13. Dispositif à capteur selon l'une des revendications 11 ou 12, **caractérisé en ce que** le capteur d'accélération (10) est conçu comme capteur d'accélération multiaxial.

14. Dispositif à capteur selon l'une des revendications 11 à 13, **caractérisé en ce que** le dispositif à capteur (12) est conçu comme appareil de contrôle (24) pour le contrôle des ascenseurs ou est au moins intégrable dans ce type d'appareil de contrôle (24).

15. Dispositif à capteur selon l'une des revendications 11 à 14, **caractérisé en ce que** le dispositif à capteur (12) présente un appareil de commande dans lequel est im-plémenté un programme informatique conçu spécialement pour exécuter le procédé selon l'une des revendications 1 à 10.

16. Produit logiciel avec un support de données comprenant des étapes de programmation qui obligent le dispositif à capteur selon la revendication 15 à exécuter les étapes du procédé conformément à l'une des revendications 1 à 10 quand le programme informatique est exécuté dans l'appareil de commande.

Fig. 1

Fig. 2

Fig. 3

Fig. 4

24, 12, 10

26

28

30

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020215241 A1
- DE 102019117089 A1
- EP 1701135 A1